# EUROPÄISCHE PATENTSCHRIFT

(11) **EP 3 478 972 B1**
(45) Veröffentlichungstag und Bekanntmachung des Hinweises auf die Patenterteilung: **29.04.2020**
(21) Anmeldenummer: 17731151.1
(22) Anmeldetag: 20.06.2017
(51) Int. Cl.: F16B 13/06

(54) **BEFESTIGUNGSELEMENT**
FASTENING ELEMENT
ÉLÉMENT DE FIXATION

(30) Priorität: 29.06.2016 DE 102016111906
(43) Veröffentlichungstag der Anmeldung: 08.05.2019
(73) Patentinhaber: fischerwerke GmbH & Co. KG, 72178 Waldachtal (DE)
(72) Erfinder: LINKA, Martin, 72160 Horb a.N. (DE); DIXA, Raphael, 72178 Waldachtal (DE)
(86) Internationale Anmeldenummer: PCT/EP2017/065008
(87) Internationale Veröffentlichungsnummer: WO 2018/001787

(56) Entgegenhaltungen:
- WO-A1-2008/022630
- DE-A1- 3 707 510

## Beschreibung

Die Erfindung betrifft ein Befestigungselement mit den Merkmalen des Oberbegriffs des Anspruchs 1.

Aus der Offenlegungsschrift DE 37 07 510 A1 ist ein Befestigungselement bekannt, dass in einem Bohrloch durch das Spreizen einer Spreizhülse verankerbar ist. Zum Spreizen der Spreizhülse weist das Befestigungselement eine Konusmutter als Spreizkörper auf, so dass die Konusmutter durch ein Einschrauben einer Schraube in die Spreizhülse eingezogen und die Spreizhülse dadurch gespreizt werden kann. Am Schaft dieses Befestigungselements ist ein Federring als Halteelement angeordnet, der die Spreizhülse in einer vorgesehenen Lage im Bohrloch hält. Zudem ist am Schaft dieses Befestigungselements eine Hülse mit Längsrippen als Mitdrehsicherung für die Spreizhülse angeordnet, die verhindert, dass die Spreizhülse beim Spreizen im Bohrloch mitdreht.

Aufgabe der Erfindung ist, ein alternatives Befestigungselement vorzuschlagen.

Diese Aufgabe wird erfindungsgemäß durch ein Befestigungselement mit den Merkmalen des Anspruchs 1 gelöst. Das erfindungsgemäße Befestigungselement zum Verankern in einem Bohrloch erstreckt sich entlang einer Längsachse, die parallel zu oder identisch mit der Einbringrichtung des Befestigungselements ist, in die das Befestigungselement planmäßig in ein Bohrloch eingebracht wird. Das Befestigungselement weist einen sich in Längsrichtung erstreckenden Schaft auf, der ein Lastangriffsmittel, ein Halsabschnitt und ein Spreizkörper aufweist. Das Lastangriffsmittel ist insbesondere als Außengewinde ausgeführt, auf das eine Mutter zum Befestigen eines Anbauteils aufgeschraubt werden kann. Alternativ kann das Lastangriffsmittel auch als Innengewinde oder in der Art eines Bajonettverschlusses ausgebildet sein, wobei diese Aufzählung nicht abschließend ist. Der Spreizkörper dient zum Spreizen einer Spreizhülse, die am Halsabschnitt angeordnet ist. Der Spreizkörper ist insbesondere an dem in Einbringrichtung vorderen Ende des Befestigungselements angeordnet und ist insbesondere derart gestaltet, dass sich der Durchmesser eines den Spreizkörper umschreibenden Kreises in Einbringrichtung zum vorderen Ende des Spreizkörpers hin vergrößert. Insbesondere ist der Spreizkörper konisch bzw. kegelstumpfförmig geformt. Der Halsabschnitt ist ein Abschnitt am Schaft des Befestigungselements, der einen geringeren Außendurchmesser aufweist, als der Spreizkörper an seinem durchmessergrößten Querschnitt. Die Spreizhülse ist insbesondere axial beweglich am Halsabschnitt angeordnet und umfasst den Halsabschnitt insbesondere in Umfangsrichtung ganz oder zumindest über mehr als die Hälfte seines Umfangs. Durch Einziehen des Spreizkörpers in die Spreizhülse kann die Spreizhülse radial gespreizt, also in einer Radialebene zur Längsachse im Durchmesser vergrößert werden, so dass sie in einem Bohrloch vom Spreizkörper zur Bohrlochwand hin bewegt und reib- und/oder formschlüssig gegen die Bohrlochwand verspannt werden kann. Insbesondere wird zum Spreizen der Spreizkörper entlang der Längsachse gegen die Spreizhülse bewegt, insbesondere entgegen der Einbringrichtung. Um beim Einziehen des Spreizkörpers in die Spreizhülse die Spreizhülse in einer bestimmten Position im Bohrloch zu halten, ist am Schaft des Befestigungselements ein Halteelement angeordnet, insbesondere zwischen der Spreizhülse und dem Lastangriffsmittel. Das Halteelement weist eine Öffnung auf, in der der Schaft aufgenommen ist, insbesondere der Halsabschnitt des Schafts. Das Halteelement ist zur Veränderung seines Durchmessers elastisch verformbar, also reversibel im Durchmesser veränderbar. Der Durchmesser kann insbesondere durch radialen Druck verkleinert und durch Entlastung wieder vergrößert werden. Somit kann sich das Halteelement aufgrund seiner elastischen Verformbarkeit in radialer und/oder in Umfangsrichtung an den tatsächlich vorhandenen Durchmesser eines Bohrlochs anpassen, in das das Befestigungselement eingeführt wird. Hierdurch wird insbesondere das Befestigungselement gegen Herausfallen bei einer Überkopfmontage gesichert.

Erfindungsgemäß ist das Halteelement durch radialen Druck derart zusammendrückbar, dass der Außendurchmesser des Halteelements größer als der Außendurchmesser der nicht-gespreizten Spreizhülse und der Innendurchmesser des Halteelements gleich dem Durchmesser des Teils des Schafts ist, an dem das Halteelement angeordnet ist, derart, dass das Halteelement reibschlüssig drehfest mit dem Schaft verbunden ist. Insbesondere ist das Halteelement am Halsabschnitt angeordnet und das Halteelement ist aufgrund der zwischen dem Schaft und dem Halteelement wirkenden Reibung drehfest auf dem Schaft gehalten. Eine axiale Bewegung des Halteelements zum Schaft ist aber weiterhin möglich, sofern die Reibung überwunden wird. "Zusammendrückbar" meint hier insbesondere in radialer und/oder in Umfangsrichtung zusammendrückbar. Der Außendurchmesser des Halteelements ist insbesondere größer als der Durchmesser, insbesondere größer als der Nenndurchmesser eines Bohrlochs in der das Befestigungselement planmäßig eingebracht wird, so dass die Bohrlochwand beim Einführen des Befestigungselements in das Bohrloch einen radialen Druck auf das Halteelement ausübt. Das Halteelement liegt somit an der Bohrlochwand an, insbesondere derart, dass es aufgrund der zwischen dem Halteelement und der Bohrlochwand auftretenden Reibung drehfest im Bohrloch gehalten ist. Dagegen muss die Spreizhülse nicht an der Bohrlochwand anliegen. Im Gegenteil ist der Außendurchmesser der Spreizhülse vorzugsweise so gewählt, dass er im nicht-gespreizten Zustand kleiner als der Nenndurchmesser des Befestigungselements ist, also bei einem Befestigungselement mit dem Nenndurchmesser 10 mm, das planmäßig in ein 10er Bohrloch eingebracht wird, beispielsweise 9,8 mm, sodass das Befestigungselement problemlos und insbesondere ohne ein Schlagen mit einem Hammer auf das in Einbringrichtung hintere Ende des Befestigungselements, in ein planmäßig hergestelltes Bohrloch mit Nenndurchmesser eingeführt werden kann. Durch den radialen Druck, den die Bohrlochwand auf das Halteelement ausübt, ist erfindungsgemäß zudem der Schaft drehfest mit dem Halteelement verbunden. Obwohl der Außendurchmesser des Halteelements in Folge des Zusammendrückens noch größer als der Außendurchmesser der Spreizhülse ist, ist er auf seiner Innenseite bereits in Kontakt mit dem Schaft. Somit ist das Befestigungselement nach dem Einführen in ein Bohrloch drehfest im Bohrloch gehalten. Insbesondere ist das Haltemoment durch die drehfeste Verbindung von Halteelement und Schaft größer als das Moment zum Aufbringen eines Lastabtragsmittels auf das Lastangriffsmittel. Das Lastabtragsmittel ist insbesondere eine Mutter, wenn das Lastangriffsmittel ein Außengewinde ist, und eine Schraube, wenn das Lastangriffsmittel ein Innengewinde ist. Ein Mitdrehen des Befestigungselements, wie es beispielsweise beim Aufschrauben einer Mutter auf das als Außengewinde ausgebildete Lastangriffsmittel auftreten könnte, wird somit durch die erfindungsgemäße Ausgestaltung des Befestigungselements wirksam verhindert. Zudem zeichnet sich das erfindungsgemäße Befestigungselement durch einen einfachen und kostengünstig herstellbaren Aufbau aus und es kann ohne großen Kraftaufwand in ein Bohrloch eingebracht werden.

Vorzugsweise weist das Halteelement eine ring- oder hülsenförmige Wandung mit mindestens einer Schwächung auf. Die Schwächung dient zur Vergrößerung der Verformbarkeit der Wandung in radialer und/oder in Umfangsrichtung. Mit "Schwächung" ist hier insbesondere eine Nut, ein Schlitz oder ein federartiges Element gemeint, das aufgrund seiner Formgebung eine elastische Änderung des Außen- bzw. des Innendurchmessers der Wandung erleichtert. Auch können mehrere Schlitze angeordnet sein, beispielsweise in und entgegen der Einbringrichtung und in Umfangsrichtung voneinander beanstandet. Insbesondere durchtrennt die Schwächung die Wandung vollständig, insbesondere als Schlitz in axialer Richtung, wodurch an der Wandung beidseitig des Schlitzes gegeneinander gerichtete Stirnflächen entstehen, die in Umfangsrichtung voneinander beanstandet sind. Ein derartig gestalteter Federring lässt sich in einfacher Weise durch eine radiale Bewegung zur Montage auf dem Schaft des Befestigungselements aufschieben und ist zudem durch radialen Druck elastisch verformbar.

Bei einer weiteren bevorzugten Ausgestaltungsform des erfindungsgemäßen Befestigungselements ist der Schaft einstückig, das heißt, das Lastangriffsmittel, der Halsabschnitt und der Spreizkörper sind aus einem Stück hergestellt, beispielsweise aus einem Stück Stahldraht durch Kaltmassivumformung, wie es bei Bolzenankern üblich ist. Dies erlaubt eine kostengünstige Herstellung und einen einfachen Aufbau des Befestigungselements mit wenigen Teilen.

Weiterhin ist bevorzugt, dass am Halteelement mindestens ein Verbindungselement zur Verbindung mit der Spreizhülse angeordnet ist. Das Verbindungselement erstreckt sich insbesondere in Längsrichtung zur Spreizhülse hin und verbindet das Halteelement mit der Spreizhülse insbesondere drehfest und/oder axialfest. Durch diese Ausgestaltung wird erreicht, dass die Spreizhülse über das Halteelement mit dem Schaft des Befestigungselements dann dreh- und/oder axialfest verbunden ist, wenn das Befestigungselement planmäßig in ein Bohrloch eingebracht ist. Im Fall einer axialfesten Verbindung kann diese gegebenenfalls beim Spreizen wieder getrennt werden. Zudem kann die Spreizhülse mit dem Verbindungselement derart verbunden sein, dass das Verbindungselement die Spreizhülse am Schaft des Befestigungselements hält. Dies ist insbesondere dann von Vorteil, wenn die Spreizhülse nicht einteilig ist, sondern aus mehreren Spreizschalen besteht.

Bei einer weiteren bevorzugten Ausgestaltungsform des erfindungsgemäßen Befestigungselements sind am Halteelement radial nach außen abstehende Vorsprünge angeordnet. Diese radial abstehenden Vorsprünge können in radialer Richtung elastisch verformbar sein, derart, dass sie die Zusammendrückbarkeit des Halteelements bedingen. Insbesondere sind die radial nach außen abstehenden Vorsprünge elastisch federnd an einer ring- oder hülsenförmigen Wandung des Halteelements angeordnet. Die Zusammendrückbarkeit wird in diesem Fall von den Vorsprüngen gewährleistet, während die Wandung stabil und wenig verformbar ausgeführt werden kann. Die Vorsprünge sind vorzugsweise in Aufnahmeräume in der Wandung des Halteelements bewegbar, sodass der Durchmesser des Halteelements durch ein Einfedern der Vorsprünge in die Aufnahmeräume auch einem Bohrloch angepasst werden kann, dessen Durchmesser im unteren Toleranzbereich des für das Befestigungselement planmäßig zulässigen Durchmessers liegt.

Eine besonders leicht aufspreizbare Ausgestaltungsform des erfindungsgemäßen Befestigungselements weist eine Spreizhülse auf, die aus mehreren einzelnen Spreizschalen besteht, die nicht einstückig miteinander verbunden sind. Die einzelnen Spreizschalen können über das Verbindungselement am Schaft des Befestigungselements angeordnet sein und von dem Verbindungselement am Schaft gehalten sein.

Vorzugsweise ist die Spreizhülse von einer Ringfeder umgeben, die die Spreizhülse zumindest teilweise umfasst und insbesondere Spreizschalen der Spreizhülse zusammenhält. Die Spreizschalen können miteinander einstückig verbunden oder als einzelne Teile am Schaft angeordnet sein. Die Ringfeder besteht insbesondere aus Metall, Gummi oder Kunststoff und kann geschlitzt sein. Sie muss die Spreizhülse nicht im vollen Umfang umschließen. Die Ringfeder verhindert, dass die Spreizhülse unbeabsichtigt spreizt. Besteht die Spreizschale aus einzelnen, nicht einstückig miteinander verbundenen Spreizschalen, so hält die Ringfeder die Spreizschalen am Schaft.

Vorzugsweise liegt die Ringfeder in einer Nut ein, die in Umfangsrichtung an der Spreizhülse ausgebildet ist. Dies gewährleistet eine gute Verbindung zwischen der Ringfeder und der Spreizhülse. Zudem wird in diesem Fall durch die Ringfeder der Durchmesser des Befestigungselements im Bereich der Spreizhülse nicht oder nur unwesentlich vergrößert, da die Ringfeder in der Nut derart einliegen kann, dass sie in radialer Richtung nicht oder nur geringfügig über die Spreizhülse übersteht.

Die Nut ist vorzugsweise an den Spreizschalen ausgebildet, insbesondere in einem Bereich der Spreizschalen, der in Umfangsrichtung eine reduzierte Breite aufweist. Die Herstellung der Nut an Spreizschalen, insbesondere im Bereich mit reduzierter Breite, ist durch Prägen einfach und erfordert insbesondere im Bereich der reduzierten Breite relativ geringen Kräfte.

Vorzugsweise ist das Verbindungselement mit der Ringfeder verbunden. Dies ermöglicht einen einfach herzustellenden, kostengünstigen Aufbau des Befestigungselements, da das Verbindungselement mit der Ringfeder insbesondere einstückig ausgeführt werden kann.

Aufgrund der beschriebenen Ausbildung lässt sich das erfindungsgemäße Befestigungselement ohne großen Kraftaufwand, insbesondere ohne der Notwendigkeit, dass das Befestigungselement mit einem Hammer in ein Bohrloch eingeschlagen werden muss, in ein planmäßig mit Nenndurchmesser erstelltes Bohrloch einbringen, was hier insbesondere einschieben oder einstecken durch einen Anwender per Hand bedeutet. Daher muss bei dem erfindungsgemäßen Befestigungselement kein Einschlagzapfen an dem in Einbringrichtung hinteren Ende des Schafts vorgesehen werden, wie dies bei Bolzenankern derzeit üblich ist. Erfindungsgemäß kann sich demnach ein als Außengewinde ausgebildetes Lastangriffsmittel bis zu dem in Einbringrichtung hinteren Ende des Befestigungselements erstrecken, da die Gefahr, dass das Außengewinde beim Einbringen des Befestigungselements in das Bohrloch durch Schläge beschädigt wird, gering bzw. ausgeschlossen ist.

Die Erfindung wird nachfolgend anhand von zwei Ausführungsbeispielen näher erläutert, die in den Figuren dargestellt sind.

Es zeigen:
- Figur 1: ein erstes erfindungsgemäßes Befestigungselement in einer Seitenansicht;
- Figur 2: eine perspektivische Ansicht der Spreizhülse und des Halteelements des Befestigungselements der Figur 1;
- Figur 3: einen Schnitt durch das Befestigungselement in der Ebene III-III,
- Figur 4: einen Schnitt durch das Befestigungselement in der Ebene IV-IV,
- Figur 5: das zweite erfindungsgemäße Befestigungselement in einer Seitenansicht;
- Figur 6: eine perspektivische Ansicht der Spreizhülse und des Halteelements des Befestigungselements der Figur 3; und
- Figur 7: eine perspektivische Ansicht einer Spreizschale der Spreizhülse des zweiten erfindungsgemäßen Befestigungselements.

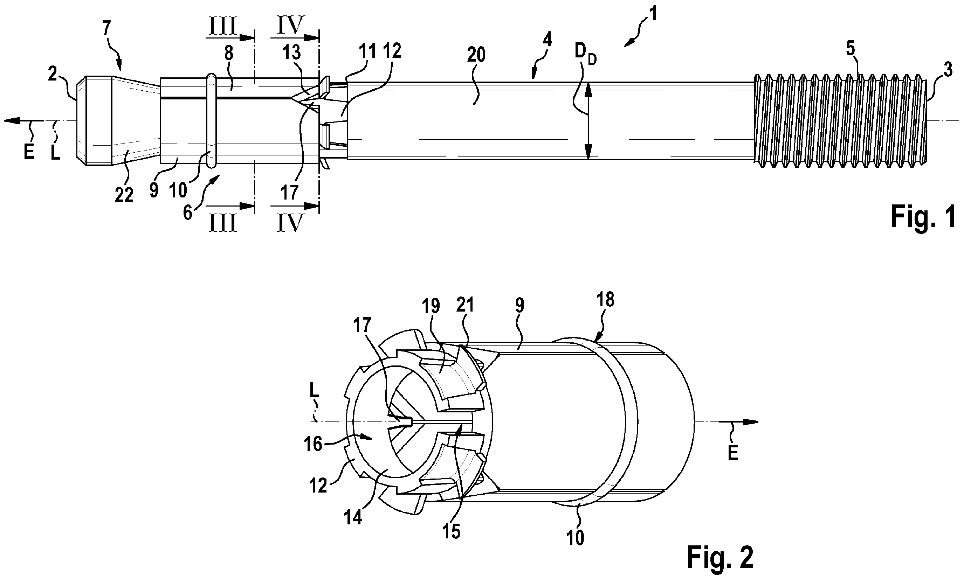

In den Figuren 1 bis 4 ist ein erstes erfindungsgemäßes Befestigungselement 1 zum Verankern in einem nicht dargestellten Bohrloch dargestellt. Das Befestigungselement 1 erstreckt sich entlang einer Längsachse L von einem in Einbringrichtung E vorderen Ende 2 zu einem hinteren Ende 3 des Befestigungselements 1. Das Befestigungselement 1 ist als Bolzenankern ausgeführt mit einem lang gestreckten, stiftförmigen und einstückig ausgebildeten Schaft 4. Ausgehend vom hinteren Ende 3 ist am Schaft 4 ein Außengewinde 5 als Lastangriffsmittel ausgebildet, an das sich in Einbringrichtung E ein zylindrischer Distanzabschnitt 20 anschließt. Das Außengewinde 5 erstreckt sich bis zum hinteren Ende 3 des Befestigungselements 1. In Einbringrichtung E vor dem Distanzabschnitt 20 ist ein Halsabschnitt 6 angeordnet, der ebenfalls zylindrisch ist, mit einem Durchmesser D, der aber kleiner als der Durchmesser D_{D} des Distanzabschnitts 20 ist. An den Halsabschnitt 6 schließt sich in Einbringrichtung E als vorderer Abschnitt des Schafts 4 ein Spreizkörper 7 an, der einen konischen Spreizabschnitt 22 aufweist, der sich in Einbringrichtung E im Durchmesser erweitert.

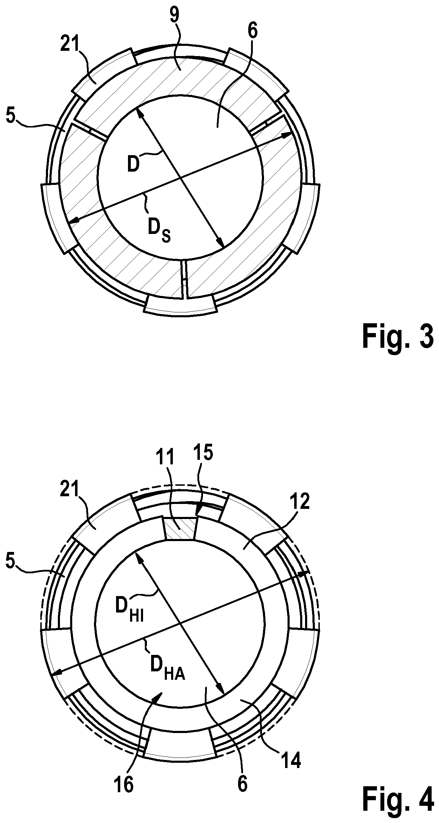

Am Halsabschnitt 6 ist eine Spreizhülse 8 angeordnet, die aus drei einzelnen Spreizschalen 9 besteht, die in Umfangsrichtung gewölbt sind und im Querschnitt Teile eines Kreisrings bilden, wie dies in Figur 3 zu sehen ist. Die Spreizschalen 9 sind nicht miteinander verbunden, insbesondere nicht einstückig. An den hinteren Enden ihrer Längsränder sind die Spreizschalen 9 abgeschrägt, so dass zwischen den Spreizschalen dreiecksförmige Aussparungen 13 vorhanden sind. Auf dem Halsabschnitt 6 des Schafts 4 werden die drei Spreizschalen 9 durch einen als Ringfeder 23 dienenden Gummiring 10 gehalten, der in einer Nut 18 einliegt. Durch den Gummiring 10 werden die Spreizschalen 9 am Halsabschnitt 6 derart gehalten, dass sie mit ihren Innenseiten flächig am Halsabschnitt 6 anliegen (vgl. Figur 3). Zwischen der Spreizhülse 8 und dem als Ringstufe 11 ausgebildeten Übergang vom Halsabschnitt 6 zum Distanzabschnitt 20 ist ein Halteelement 12 angeordnet.

Das Halteelement 12 weist eine hülsenförmige Wandung 14 auf, mit einem axialen Schlitz 15 als Schwächung. Die Wandung 14 bildet aufgrund des Schlitzes 15 einen offenen Kreisring mit einer Öffnung 16 zur Aufnahme des Halsabschnitts 6 des Schafts 4, wie dies in Figur 4 zu sehen ist. An seinem in Einbringrichtung E hinteren Ende ist das Halteelement 12 zur Anlage an der Ringstufe 11 eben ausgebildet. An ihrem vorderen Ende sind an der Wandung 14 drei stiftförmige Verbindungselemente 17 als Vorsprünge 21 ausgebildet, die über den Umfang der Wandung 14 gleich verteilt sind und die in die dreiecksförmige Aussparungen 13 der Spreizhülse 8 eingreifen und die Spreizhülse 8 mit dem Halteelement 12 drehfest verbinden. In der Mantelfläche der Wandung 14 sind rechteckförmige Aufnahmeräume 19 ausgebildet, an deren vorderen Enden radial nach außen abstehende Vorsprünge 21 angeordnet sind. Die Vorsprünge 21 sind mit der Wandung 14 einstückig aus Kunststoff hergestellt und federnd mit der Wandung 14 verbunden. Die Vorsprünge 21 stehen radial nach außen ab, derart, dass sie den Außendurchmesser D_{HA} des Halteelements 12 definieren (vgl. Figur 4).

Die Spreizschalen 9 bilden die Spreizhülse 8, die in einem nicht gespreizten Zustand einen Außendurchmesser D_{S} aufweist, der kleiner als der Nenndurchmesser des Befestigungselements 1 ist. Der Nenndurchmesser des Befestigungselements 1 ist gleich dem Nenndurchmesser des Bohrers, mit dem das Bohrloch, in das das Befestigungselement 1 eingebracht werden soll, planmäßig gebohrt wird. Beispielsweise wird für ein 10er Bohrloch ein 10er Bohrer verwendet und der Nenndurchmesser des Befestigungselements 1 ist 10 mm, auch wenn der tatsächliche Durchmesser des Befestigungselements 1 hiervon abweichen kann. Bei dem erfindungsgemäßen Befestigungselement 1 ist der Außendurchmesser D_{S} der Spreizhülse 8 kleiner als der Nenndurchmesser des Befestigungselements 1 und beträgt 9,8 mm. Das Halteelement 14 weist dagegen aufgrund der Vorsprünge 21 einen Außendurchmesser D_{HA} auf, der größer als der Nenndurchmesser ist. Dieser Außendurchmesser D_{HA} ist durch die Vorsprünge 21 definiert und somit durch elastische Verformung veränderbar.

Wird das Befestigungselement 1 planmäßig in ein Bohrloch mit Nenndurchmesser eingeführt, behindert die Spreizhülse 8 das Einführen nicht, sodass das Befestigungselement 1 ohne großen Kraftaufwand, insbesondere ohne Verwendung eines Hammers, in das Bohrloch eingeschoben bzw. eingesteckt werden kann. Dabei klappen die radial nach außen abstehenden Vorsprünge 21 zumindest teilweise federnd in die Aufnahmeräume 19. Die Vorsprünge 21 liegen mit ihren radial äußeren, freien Enden an der Bohrlochwand an und werden federnd gegen die Bohrlochwand gedrückt, derart, dass die Bohrlochwand das Halteelement 12 radial zusammendrückt, sodass sich der Schlitz 15 etwas schließt und der Innendurchmesser D_{HI} des Halteelements 12 dem Durchmesser D des Halsabschnitts 6 entspricht. Der Außendurchmesser D_{HA} des Halteelements 12 ist somit größer als der Außendurchmesser D_{S} der nicht gespreizten Spreizhülse 8 und der Innendurchmesser D_{HI} des Halteelements 12 ist gleich dem Durchmesser D des Halsabschnitts 6. Durch den von der Bohrlochwand auf das Halteelement 12 ausgeübten radialen Druck liegt das Halteelement 12 eng am Halsabschnitt 6 an, so dass durch die Reibung zwischen dem Halteelement 12 und dem Halsabschnitt 6 das Halteelement 12 reibschlüssig drehfest mit dem Schaft 4 verbunden ist. Die wirkende Reibung behindert eine Verschiebung des Schafts 4 gegenüber dem Halteelement 12 und der Spreizhülse 8 in axialer Richtung nur geringfügig und kann durch das Anziehen einer auf das Außengewinde 5 aufgeschraubten Mutter (nicht dargestellt) überwunden werden. Dagegen reicht die beim Aufdrehen der Mutter zwischen der Mutter und dem Außengewinde 5 wirkende Reibung nicht aus, die Reibung der drehfesten Verbindung von Halsabschnitt 6 und Halteelement 12 zu überwinden, so dass der Schaft 4 mit der Mutter mitdrehen würde. Durch die drehfeste Verbindung des Schaft 4 mit dem Halteelement 12 wird ein Mitdrehen des Schaft 4 beim Aufschrauben einer Mutter auf das Außengewinde 5 verhindert. Wird die Mutter angezogen, so wird der Schaft 4 entgegen der Einbringrichtung E aus dem Bohrloch bewegt. Aufgrund des Halteelements 12, das mit seinen Vorsprüngen 21 gegen die Bohrlochwand elastisch verspannt ist, verbleibt die Spreizhülse 8 ortsfest im Bohrloch und der Spreizkörper 7 wird mit seinem konischen Spreizabschnitts 22 in die Spreizhülse 8 eingezogen, wodurch die Spreizschalen 9 radial gespreizt werden. Die Reibung zwischen Halteelement 12 und dem Schaft 4 wird von der in axialer Richtung wirkenden Kraft überwunden, wohingegen die durch das Aufdrehen der Mutter in Umfangsrichtung wirkende Kraft nicht ausreicht, um die drehfeste Verbindung zwischen Halteelement 12 und dem Schaft 4 aufzuheben.

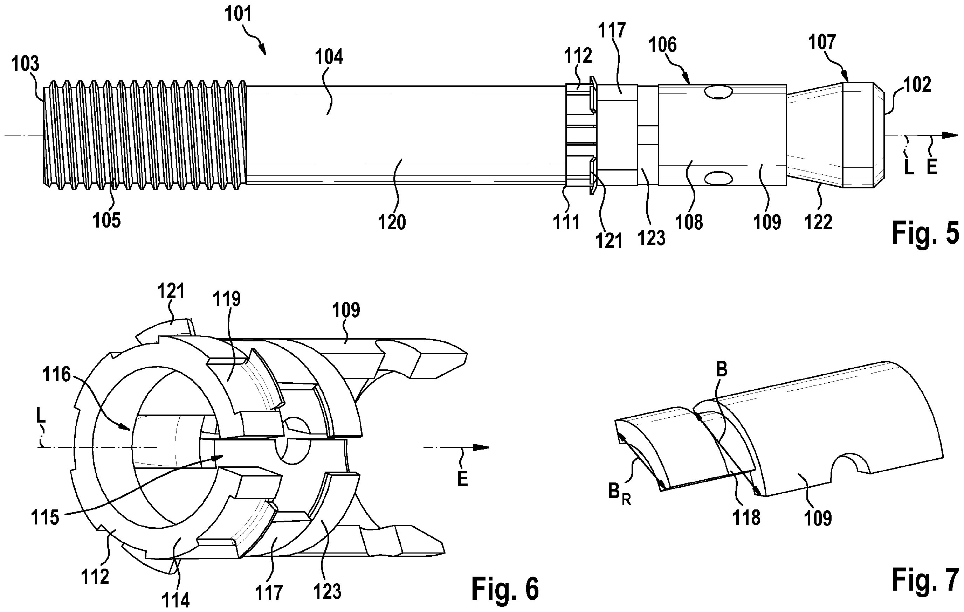

In den Figuren 5 bis 7 ist ein zweites erfindungsgemäßes Befestigungselement 101 dargestellt, dessen Schaft 104 gleich ausgebildet ist, wie der Schaft 4 des Befestigungselements 1 der Figuren 1 bis 4. Um Wiederholungen zu vermeiden, wird nachfolgend nur auf die Unterschiede zum Befestigungselement 1 der Figuren 1 bis 4 eingegangen. Das Befestigungselement 101 weist ebenfalls ein Halteelement 112 auf dessen Aufbau dem des Halteelements 12 des ersten erfindungsgemäßen Befestigungselements 1 entspricht. Allerdings sind die am einbringseitig vorderen Ende der Wandung 114 angeordneten, als Verbindungselemente 117 wirkenden Vorsprünge 121 einstückig mit einer in Umfangsrichtung verlaufenden, geschlitzten Ringfeder 123, die in Nuten 118 der Spreizschalen 109 eingreift. In diesem Fall sind die Spreizschalen 109 sowohl dreh- als auch axialfest mit dem Halteelement 112 verbunden. Die Nuten 118 sind in einem hinteren Bereich der Spreizschale 109 ausgebildet, der eine in Umfangsrichtung gemessene Breite B_{R} aufweist, die gegenüber der Breite B des in Einbringrichtung E vorderen Bereichs der Spreizschale 109 reduziert ist, wodurch sich die Nut 118 leichter in das Material durch Prägen einformen lässt als im vorderen Bereich der Spreizschale 109.

Die in den Figuren dargestellten erfindungsgemäßen Befestigungselemente 1, 101 lassen sich aufgrund ihrer erfindungsgemäßen Ausgestaltung mit einer geringen axialen Kraft in ein Bohrloch einbringen. Besonders von Vorteil ist, dass im Regelfall auf einen Hammer zum Einschlagen der Befestigungselemente 1, 101 in ein Bohrloch verzichtet werden kann. Die Befestigungselemente 1, 101 sind einfach aufgebaut, bestehen aus relativ wenig Teilen, die leicht zu montieren sind, und sie sind daher kostengünstig herstellbar.

### Bezugszeichenliste

- 1, 101: Befestigungselement
- 2, 102: vorderes Ende des Befestigungselements 1, 101
- 3, 103: hinteres Ende des Befestigungselements 1, 101
- 4, 104: Schaft
- 5, 105: Außengewinde
- 6, 106: Halsabschnitt
- 7, 107: Spreizkörper
- 8, 108: Spreizhülse
- 9, 109: Spreizschale
- 10: Gummiring
- 11, 111: Ringstufe
- 12, 112: Halteelement
- 13: dreiecksförmige Aussparung
- 14, 114: Wandung
- 15, 115: Schlitz
- 16, 116: Öffnung
- 17, 117: Verbindungselement
- 18, 118: Nut
- 19, 119: Aufnahmeraum
- 20, 120: Distanzabschnitt
- 21, 121: Vorsprung
- 22, 122: konischer Spreizabschnitt
- 23, 123: Ringfeder
- B: Breite einer Spreizschale 9, 109
- B_{R}: reduzierte Breite einer Spreizschale 109
- D: Durchmesser des Halsabschnitts 6
- D_{D}: Durchmesser des Distanzabschnitts 20
- D_{HA}: Außendurchmesser des Halteelements 12
- D_{HI}: Innendurchmesser des Halteelements 12
- D_{S}: Außendurchmesser der nicht gespreizten Spreizhülse 8
- E: Einbringrichtung
- L: Längsachse

## Patentansprüche

1. Befestigungselement (1, 101) zum Verankern in einem Bohrloch, wobei sich das Befestigungselement (1, 101) entlang einer Längsachse (L) erstreckt und einen Schaft (4, 104) mit einem Lastangriffsmittel, einem Halsabschnitt (6, 106) und einem Spreizkörper (7, 107) aufweist, wobei am Halsabschnitt (6, 106) eine Spreizhülse (8, 108) angeordnet ist, die durch Einziehen des Spreizkörpers (7, 107) in die Spreizhülse (8, 108) radial spreizbar ist, und wobei am Schaft (4, 104) ein Halteelement (12, 112) angeordnet ist, das zur Veränderung seines Durchmessers (D_{HA}) elastisch verformbar ist und das eine Öffnung (16, 116) aufweist, in der der Schaft (4, 104) aufgenommen ist,
**dadurch gekennzeichnet,**
**dass** das Halteelement (12, 112) durch radialen Druck derart zusammendrückbar ist, dass der Außendurchmesser (D_{HA}) des Halteelements (12, 112) größer als der Außendurchmesser (D_{S}) der nicht-gespreizten Spreizhülse (8, 108) und der Innendurchmesser (D_{HI}) des Halteelements (12, 112) gleich dem Durchmesser (D) des Teils des Schafts (4) ist, an dem das Halteelement (12, 112) angeordnet ist, derart, dass das Halteelement (12, 112) reibschlüssig drehfest mit dem Schaft (4, 104) verbunden ist.

2. Befestigungselement nach Anspruch 1, **dadurch gekennzeichnet, dass** das Halteelement (12, 112) eine ring- oder hülsenförmige Wandung (14, 114) mit mindestens einer Schwächung (15, 115) aufweist.

3. Befestigungselement nach Anspruch 1 oder 2, **dadurch gekennzeichnet, dass** der Schaft (4, 104) einstückig ist.

4. Befestigungselement nach einem der Ansprüche 1 bis 3, **dadurch gekennzeichnet, dass** am Halteelement (12, 112) mindestens ein Verbindungselement (17, 117) zur Verbindung mit der Spreizhülse (8, 108) angeordnet ist.

5. Befestigungselement nach einem der Ansprüche 1 bis 4, **dadurch gekennzeichnet, dass** am Halteelement (12, 112) radial nach außen abstehende Vorsprünge (21, 121) angeordnet sind.

6. Befestigungselement gemäß den Ansprüchen 2 und 5, **dadurch gekennzeichnet, dass**, die Vorsprünge (21, 121) federnd in Aufnahmeräume (19, 119) in der Wandung (14, 114) des Halteelements (12, 112) bewegbar sind.

7. Befestigungselement nach einem der Ansprüche 1 bis 6, **dadurch gekennzeichnet, dass** die Spreizhülse (8, 108) aus mehreren einzelnen Spreizschalen (9, 109) besteht, die nicht einstückig miteinander verbunden sind.

8. Befestigungselement nach einem der Ansprüche 1 bis 7, **dadurch gekennzeichnet, dass** die Spreizhülse (8, 108) von einer Ringfeder (23, 123) umgeben ist.

9. Befestigungselement nach Anspruch 8, **dadurch gekennzeichnet, dass** die Ringfeder (23, 123) in einer Nut (18, 118) einliegt, die in Umfangsrichtung an der Spreizhülse (8, 108) ausgebildet ist.

10. Befestigungselement nach den Ansprüchen 7 und 9, **dadurch gekennzeichnet, dass** die Nut (18, 118) an den Spreizschalen (9, 109) ausgebildet ist, insbesondere in einem Bereich der Spreizschalen (109), der eine in Umfangsrichtung reduzierte Breite (B_{R}) aufweist.

11. Befestigungselement nach Anspruch 4 und einem der Ansprüche 8 bis 10, **dadurch gekennzeichnet, dass** das Verbindungselement (17, 117) mit der Ringfeder (23, 123) verbunden ist.

12. Befestigungselement nach einem der Ansprüche 1 bis 11, **dadurch gekennzeichnet, dass** das Lastangriffsmittel ein Außengewinde (5, 105) ist, das sich bis zum in Einbringrichtung (E) hinteren Ende (3, 103) des Befestigungselements (1, 101) erstreckt.

13. Befestigungselement nach einem der Ansprüche 1 bis 12, **dadurch gekennzeichnet, dass** die Spreizhülse (8, 108) im nicht gespreizten Zustand einen Außendurchmesser (D_{S}) aufweist, der kleiner als der Nenndurchmesser des Befestigungselements (1, 101) ist.

## Claims

1. Fixing element (1, 101) for anchoring in a drilled hole, wherein the fixing element (1, 101) extends along a longitudinal axis (L) and has a shank (4, 104) having a load-application means, a neck portion (6, 106) and an expander body (7, 107), wherein on the neck portion (6, 106) there is arranged an expansion sleeve (8, 108) which is expansible radially by drawing the expander body (7, 107) into the expansion sleeve (8, 108), and wherein on the shank (4, 104) there is arranged a holding element (12, 112) which is resiliently deformable to modify its diameter (D_{HA}) and which has an opening (16, 116) in which the shank (4, 104) is accommodated,
**characterised in that**
the holding element (12, 112) is compressible by radial pressure in such a way that the external diameter (D_{HA}) of the holding element (12, 112) is larger than the external diameter (Ds) of the unexpanded expansion sleeve (8, 108) and the internal diameter (D_{HI}) of the holding element (12, 112) is the same as the diameter (D) of the part of the shank (4) on which the holding element (12, 112) is arranged, in such a way that the holding element (12, 112) is connected by frictional engagement to the shank (4, 104) so as to be fixed against relative rotation.

2. Fixing element according to claim 1, **characterised in that** the holding element (12, 112) has an annular or sleeve-like wall (14, 114) having at least one weakened position (15, 115).

3. Fixing element according to claim 1 or 2, **characterised in that** the shank (4, 104) is in one piece.

4. Fixing element according to any one of claims 1 to 3, **characterised in that** on the holding element (12, 112) there is arranged at least one connecting element (17, 117) for connection to the expansion sleeve (8, 108).

5. Fixing element according to any one of claims 1 to 4, **characterised in that** radially outwardly extending projections (21, 121) are arranged on the holding element (12, 112).

6. Fixing element according to claims 2 and 5, **characterised in that** the projections (21, 121) are movable resiliently into receiving spaces (19, 119) in the wall (14, 114) of the holding element (12, 112).

7. Fixing element according to any one of claims 1 to 6, **characterised in that** the expansion sleeve (8, 108) consists of a plurality of individual expansion shells (9, 109) which are not integrally connected to one another.

8. Fixing element according to any one of claims 1 to 7, **characterised in that** the expansion sleeve (8, 108) is surrounded by an annular spring (23, 123).

9. Fixing element according to claim 8, **characterised in that** the annular spring (23, 123) is located in a groove (18, 118) which is formed in the circumferential direction on the expansion sleeve (8, 108).

10. Fixing element according to claims 7 and 9, **characterised in that** the groove (18, 118) is formed on the expansion shells (9, 109), especially in a region of the expansion shells (109) that has a reduced width (B_{R}) in the circumferential direction.

11. Fixing element according to claim 4 and any one of claims 8 to 10, **characterised in that** the connecting element (17, 117) is connected to the annular spring (23, 123).

12. Fixing element according to any one of claims 1 to 11, **characterised in that** the load-application means is an external thread (5, 105) which extends as far as the end (3, 103) of the fixing element (1, 101) that is at the rear in the introduction direction (E).

13. Fixing element according to any one of claims 1 to 12, **characterised in that** the expansion sleeve (8, 108) in the unexpanded state has an external diameter (Ds) that is smaller than the nominal diameter of the fixing element (1, 101).

## Revendications

1. Elément de fixation (1, 101) destiné à l'ancrage dans un trou foré, lequel élément de fixation (1, 101) s'étend le long d'un axe longitudinal (L) et est muni d'un fût (4, 104) comportant un moyen d'application de charges, une région (6, 106) formant col et un corps d'écartement (7, 107), sachant qu'une douille expansible (8, 108), située sur ladite région (6, 106) formant col, peut être déployée radialement par enfoncement dudit corps d'écartement (7, 107) dans ladite douille expansible (8, 108), et sachant qu'un élément de retenue (12, 112), disposé sur ledit fût (4, 104), peut être déformé élastiquement en vue d'une modification de son diamètre (D_{HA}), et est pourvu d'un orifice (16, 116) dans lequel ledit fût (4, 104) trouve logement,
**caractérisé par le fait**
**que** l'élément de retenue (12, 112) peut être comprimé par pression radiale, de façon telle que le diamètre extérieur (D_{HA}) dudit élément de retenue (12, 112) soit supérieur au diamètre extérieur (D_{S}) de la douille expansible (8, 108) non déployée, et que le diamètre intérieur (D_{HI}) dudit élément de retenue (12, 112) soit égal au diamètre (D) de la partie du fût (4) sur laquelle ledit élément de retenue (12, 112) est implanté, de telle sorte que ledit élément de retenue (12, 112) soit relié audit fût (4, 104) par frottement, avec verrouillage rotatif.

2. Elément de fixation selon la revendication 1, **caractérisé par le fait que** l'élément de retenue (12, 112) comporte une paroi (14, 114) en forme d'anneau ou de manchon, dotée d'au moins une zone d'affaiblissement (15, 115).

3. Elément de fixation selon la revendication 1 ou 2, **caractérisé par le fait que** le fût (4, 104) se présente d'une seule pièce.

4. Elément de fixation selon l'une des revendications 1 à 3, **caractérisé par le fait qu'**au moins un élément de liaison (17, 117) est implanté sur l'élément de retenue (12, 112), en vue de la liaison avec la douille expansible (8, 108).

5. Elément de fixation selon l'une des revendications 1 à 4, **caractérisé par le fait que** des saillies (21, 121), dépassant vers l'extérieur dans le sens radial, sont disposées sur l'élément de retenue (12, 112).

6. Elément de fixation conforme aux revendications 2 et 5, **caractérisé par le fait que** les saillies (21, 121) peuvent être mues élastiquement dans des espaces de réception (19, 119), dans la paroi (14, 114) de l'élément de retenue (12, 112).

7. Elément de fixation selon l'une des revendications 1 à 6, **caractérisé par le fait que** la douille expansible (8, 108) est composée de plusieurs coques expansibles (9, 109) individuelles, qui ne sont pas reliées mutuellement d'un seul tenant.

8. Elément de fixation selon l'une des revendications 1 à 7, **caractérisé par le fait que** la douille expansible (8, 108) est entourée d'un ressort annulaire (23, 123).

9. Elément de fixation selon la revendication 8, **caractérisé par le fait que** le ressort annulaire (23, 123) est intégré dans une rainure (18, 118) pratiquée dans la douille expansible (8, 108), dans le sens périphérique.

10. Elément de fixation selon les revendications 7 et 9, **caractérisé par le fait que** la rainure (18, 118) est pratiquée dans les coques expansibles (9, 109), en particulier dans une région desdites coques expansibles (109) qui présente une largeur (B_{R}) réduite dans le sens périphérique.

11. Elément de fixation selon la revendication 4 et l'une des revendications 8 à 10, **caractérisé par le fait que** l'élément de liaison (17, 117) est relié au ressort annulaire (23, 123).

12. Elément de fixation selon l'une des revendications 1 à 11, **caractérisé par le fait que** le moyen d'application de charges est un filetage extérieur (5, 105) s'étendant jusqu'à l'extrémité (3, 103) dudit élément de fixation (1, 101) qui est située à l'arrière dans la direction d'insertion (E).

13. Elément de fixation selon l'une des revendications 1 à 12, **caractérisé par le fait que** la douille expansible (8, 108) présente, à l'état non déployé, un diamètre extérieur (D_{S}) plus petit que le diamètre nominal dudit élément de fixation (1, 101).
